(19) Europäisches Patentamt
European Patent Office
Office européen des brevets

(11) **EP 1 734 770 A1**

(12) **EUROPEAN PATENT APPLICATION**
published in accordance with Art. 158(3) EPC

(43) Date of publication:
**20.12.2006 Bulletin 2006/51**

(51) Int Cl.:
***H04N 7/32*** *(2006.01)*

(21) Application number: **05720039.6**

(22) Date of filing: **04.03.2005**

(86) International application number:
**PCT/JP2005/003767**

(87) International publication number:
**WO 2005/101850 (27.10.2005 Gazette 2005/43)**

(84) Designated Contracting States:
**DE FR GB NL**

(30) Priority: **09.04.2004 JP 2004115227**

(71) Applicant: **SONY CORPORATION**
**Tokyo 141-0001 (JP)**

(72) Inventors:
 • **OGAWA, Kaname,**
 **c/o Sony Corporation**
 **Tokyo 1410001 (JP)**

 • **YAGASAKI, Yoichi,**
 **c/o Sony Corporation**
 **Tokyo 1410001 (JP)**
 • **SEKI, Takahito,**
 **c/o Sony Corporation**
 **Tokyo 1410001 (JP)**

(74) Representative: **Horner, David Richard**
 **D Young & Co**
 **120 Holborn**
 **London EC1N 2DY (GB)**

(54) **IMAGE SIGNAL PROCESSING APPARATUS AND METHOD, RECORDING MEDIUM, PROGRAM AND VIDEO CAMERA**

(57) The present invention relates to device and method for processing picture signals, a recording medium, a program, and a video camera that each allow the prediction residual of a coding-target picture to be predicted accurately before actual coding of the coding-target picture. The pseudo prediction residual BD(n) corresponding to the n-th picture from a pseudo prediction residual producer is input to a prediction residual calculator 21 and a delayer 22. The prediction residual calculator 21 calculates the anticipated prediction residual PRED(n) corresponding to the coding-target picture signal of the n-th picture by adding a value G(SAD(n-1) - BD(n-1)) to the pseudo prediction residual BD(n) that is input from the pseudo prediction residual producer 2 and corresponds to the n-th picture. The value G(SAD(n-1) - BD(n-1)) is obtained by multiplying by an adjustment coefficient G the difference between the pseudo prediction residual BD(n-1) corresponding to the coding-target picture signal of the n-1-th picture that results from delaying by the delayer 22 by one picture and the prediction residual SAD(n-1) that is actually calculated by the coder 5 and corresponds to the coding-target picture signal of the n-1-th picture. The present invention can be applied to a digital video camera.

FIG. 3

**Description**

[Technical Field]

The present invention relates to device and method for processing picture signals, a recording medium, a program, and a video camera, and particularly to device and method for processing picture signals, a recording medium, a program, and a video camera that are suitably used for control of the compression ratio in compression coding of picture signals.

[Background Art]

For example, when digitalized moving picture data is recorded in an information recording medium or is transmitted via a network typified by the Internet, the moving picture data is compression-coded since the data amount thereof is greatly large. As a representative coding method for moving picture data, a motion-compensated predictive coding method can be cited.

Specific examples of the motion compensated predictive coding method include an MPEG (Moving Picture Experts Group) coding system. In the MPEG system, one frame or one field is divided into macro blocks that are each constructed of 16 lines by 16 pixels, and motion-compensated predictive coding is executed on a macro block basis.

The motion-compensated predictive coding method is a coding method of utilizing correlations of pictures along the time axis. Specifically, in this method, motion vectors of a picture to be coded (coding-target picture) with respect to a picture as a reference object (reference picture) are detected, and then in accordance with the motion vectors, motion compensation is executed for the reference picture that has been subjected to coding and decoding, to thereby produce a predictive picture. Subsequently, the prediction residual of the coding-target picture with respect to the predictive picture is obtained, and then the prediction residual and motion vectors are coded so that the information amount of the moving picture is compressed.

The motion-compensated predictive coding method includes two kinds of coding schemes roughly: intra-coding and inter-coding. In the intra-coding, the information of a coding-target picture is directly coded regarding macro blocks as a coding target. In the inter-coding, pictures before and after a coding-target picture in terms of time are used as a reference picture, and the difference between the predictive picture produced from the reference picture and the coding-target picture is coded.

In the MPEG system, the respective pictures are coded with being categorized into any picture type of the I-picture (Intra coded picture), P-picture (Predictive coded picture), and B-picture (Bidirectionally predictive coded picture). Furthermore, in the MPEG system, processing is executed on a GOP (Group of picture) basis.

When coded data resulting from the coding on a GOP basis is recorded in an information recording medium or is transmitted, the compression ratio of the coding needs to be controlled accurately so that a high picture quality is achieved when the coded data is expansion-decoded, and so that the coded data has a data amount equal to or smaller than the recording capacity of the information recording medium or the transmission capacity of the communication line.

In a method for accurately controlling the compression ratio of coding in related art, in advance of actual coding, the amount of codes to be generated is accurately estimated for a picture to be coded, and the compression ratio is controlled based on the estimation result.

For example, there is a method in which, in order to accurately estimate the amount of codes to be generated, parameters regarding the compression ratio are tentatively set in advance of actual coding, followed by execution of the coding. However, such a method involves a need to execute a calculation of which calculation amount is twice the calculation amount necessary in the actual coding, and therefore problematically results in low efficiency.

As a countermeasure against this, there is a method in which the amount of codes to be generated is estimated based on the prediction residual of a picture without executing a calculation of which calculation amount is twice that necessary in actual coding (refer to e.g. Patent Document 1).

However, the prediction residual of a coding-target picture is an index that cannot be obtained unless the coding-target picture is actually coded. Therefore, the prediction residual used for the estimation of the amount of codes to be generated is not the prediction residual corresponding to the coding-target picture, but the prediction residual of the picture previous by one frame to the coding-target picture is fed back and used as the prediction residual of the coding-target picture for example.

[Patent Document 1]
WO98/26599 (Japanese Patent Application No. Hei 10-526505)

[Disclosure of the Invention]

[Problem to be Solved by the Invention]

If the prediction residual of e.g. the picture previous by one frame to the coding-target picture is fed back and used as the prediction residual of the coding-target picture as described above, there is a problem in that, if a scene change or the like exists between the coding-target picture and previous picture, the amount of codes to be generated regarding the coding-target picture is not adequately estimated, and hence the coding compression ratio cannot be controlled accurately.

The present invention is made in consideration of such a circumstance, and an object thereof is to allow the prediction residual of a coding-target picture to be predicted accurately before actual coding of the coding-target picture.

[Means for Solving the Problem]

A picture signal processing device according to the present invention includes an intra prediction residual calculator that produces an intra predictive picture for a still picture constructing a moving picture, and calculates an intra prediction residual that indicates a difference between the still picture and the intra predictive picture, an inter prediction residual calculator that produces an inter predictive picture for the still picture constructing a moving picture, and calculates an inter prediction residual that indicates a difference between the still picture and the inter predictive picture, and a pseudo prediction residual producer that produces a pseudo prediction residual corresponding to the still picture by using at least one of the intra prediction residual or the inter prediction residual. The picture signal processing device also includes an anticipated prediction residual calculator that corrects a pseudo prediction residual produced by the pseudo prediction residual producer and corresponding to an n-th still picture, based on a pseudo prediction residual corresponding to a previous still picture of the n-th still picture and an actual prediction residual corresponding to the previous still picture of the n-th still picture, to thereby calculate an anticipated prediction residual corresponding to the n-th still picture, a compression ratio controller that controls a compression ratio of compression coding of a picture signal corresponding to the n-th still picture based on the anticipated prediction residual that is calculated by the anticipated prediction residual calculator and corresponds to the n-th still picture, and a coder that executes compression coding of the picture signal corresponding to the n-th still picture in accordance with control by the compression ratio controller, and supplies the anticipated prediction residual calculator with an actual prediction residual that is produced through a processing process of the compression coding and corresponds to the n-th still picture.

The pseudo prediction residual producer may employ the smaller of the intra prediction residual and the inter prediction residual for each divided region that is set in the still picture and has a predetermined size, to thereby produce the pseudo prediction residual corresponding to the still picture.

The divided region may be a macro block.

The anticipated prediction residual calculator may calculate the anticipated prediction residual corresponding to the n-th still picture by adding a certain value to the pseudo prediction residual that is produced by the pseudo prediction residual producer and corresponds to the n-th still picture. The certain value is obtained by multiplying by a predetermined coefficient a difference between the pseudo prediction residual corresponding to the previous still picture of the n-th still picture and the actual prediction residual corresponding to the previous still picture of the n-th still picture.

The predetermined coding system may be an MPEG system.

The predetermined coding system may be the MPEG4-AVC system.

A picture signal processing method according to the present invention includes an intra prediction residual calculation step for producing an intra predictive picture for a still picture constructing a moving picture, and calculating an intra prediction residual that indicates a difference between the still picture and the intra predictive picture, an inter prediction residual calculation step for producing an inter predictive picture for the still picture constructing a moving picture, and calculating an inter prediction residual that indicates a difference between the still picture and the inter predictive picture, and a pseudo prediction residual production step for producing a pseudo prediction residual corresponding to the still picture by using at least one of the intra prediction residual or the inter prediction residual. The picture signal processing method also includes an anticipated prediction residual calculation step for correcting a pseudo prediction residual that is produced through processing in the pseudo prediction residual production step and corresponds to an n-th still picture, based on a pseudo prediction residual corresponding to a previous still picture of the n-th still picture and an actual prediction residual corresponding to the previous still picture of the n-th still picture, to thereby calculate an anticipated prediction residual corresponding to the n-th still picture, a compression ratio control step for controlling a compression ratio of compression coding of a picture signal corresponding to the n-th still picture based on the anticipated prediction residual that is calculated through processing in the anticipated prediction residual calculation step and corresponds to the n-th still picture, and a coding step for executing compression coding of the picture signal corresponding to the n-th still picture in accordance with control by processing in the compression ratio control step, and supplying for the processing in the anticipated prediction residual calculation step an actual prediction residual that is produced through a processing process of the compression coding and corresponds to the n-th still picture.

A program in a recording medium according to the present invention includes an intra prediction residual calculation step for producing an intra predictive picture for a still picture constructing a moving picture, and calculating an intra prediction residual that indicates a difference between the still picture and the intra predictive picture, an inter prediction residual calculation step for producing an inter predictive picture for the still picture constructing a moving picture, and calculating an inter prediction residual that indicates a difference between the still picture and the inter predictive picture, and a pseudo prediction residual production step for producing a pseudo prediction residual corresponding to the still picture by using at least one of the intra prediction residual or the inter prediction residual. The program also includes an anticipated prediction residual calculation step for correcting a pseudo prediction residual that is produced through processing in the pseudo prediction residual production step and corresponds to an n-th still picture, based on a pseudo prediction residual corresponding to a previous still picture of the n-th still picture and an actual prediction residual corresponding to the previous still picture of the n-th still picture, to thereby calculate an anticipated prediction residual corresponding to the n-th still picture, a compression ratio control step for controlling a compression ratio of compression coding of a picture signal corresponding to the n-th still picture based on the anticipated prediction residual that is calculated through processing in the anticipated prediction residual calculation step and corresponds to the n-th still picture, and a coding step for executing compression coding of the picture signal corresponding to the n-th still picture in accordance with control by processing in the compression ratio control step, and supplying for the processing in the anticipated prediction residual calculation step an actual prediction residual that is produced through a processing process of the compression coding and corresponds to the n-th still picture.

A program according to the present invention causes a computer to execute processing that includes an intra prediction residual calculation step for producing an intra predictive picture for a still picture constructing a moving picture, and calculating an intra prediction residual that indicates a difference between the still picture and the intra predictive picture, an inter prediction residual calculation step for producing an inter predictive picture for the still picture constructing a moving picture, and calculating an inter prediction residual that indicates a difference between the still picture and the inter predictive picture, and a pseudo prediction residual production step for producing a pseudo prediction residual corresponding to the still picture by using at least one of the intra prediction residual or the inter prediction residual. The processing also includes an anticipated prediction residual calculation step for correcting a pseudo prediction residual that is produced through processing in the pseudo prediction residual production step and corresponds to an n-th still picture, based on a pseudo prediction residual corresponding to a previous still picture of the n-th still picture and an actual prediction residual corresponding to the previous still picture of the n-th still picture, to thereby calculate an anticipated prediction residual corresponding to the n-th still picture, a compression ratio control step for controlling a compression ratio of compression coding of a picture signal corresponding to the n-th still picture based on the anticipated prediction residual that is calculated through processing in the anticipated prediction residual calculation step and corresponds to the n-th still picture, and a coding step for executing compression coding of the picture signal corresponding to the n-th still picture in accordance with control by processing in the compression ratio control step, and supplying for the processing in the anticipated prediction residual calculation step an actual prediction residual that is produced through a processing process of the compression coding and corresponds to the n-th still picture.

A video camera according to the present invention includes a picture capturing unit that captures a moving picture of a target object and produces the picture signal, an intra prediction residual calculator that produces an intra predictive picture for a still picture constructing a moving picture captured by the picture capturing unit, and calculates an intra prediction residual that indicates a difference between the still picture and the intra predictive picture, an inter prediction residual calculator that produces a pseudo inter predictive picture for the still picture constructing a moving picture captured by the picture capturing unit, and calculates an inter prediction residual that indicates a difference between the still picture and the inter predictive picture, and a pseudo prediction residual producer that produces a pseudo prediction residual corresponding to the still picture by using at least one of the intra prediction residual or the inter prediction residual. The video camera also includes an anticipated prediction residual calculator that corrects a pseudo prediction residual produced by the pseudo prediction residual producer and corresponding to an n-th still picture, based on a pseudo prediction residual corresponding to a previous still picture of the n-th still picture and an actual prediction residual corresponding to the previous still picture of the n-th still picture, to thereby calculate an anticipated prediction residual corresponding to the n-th still picture, a compression ratio controller that controls a compression ratio of compression coding of a picture signal corresponding to the n-th still picture based on the anticipated prediction residual that is calculated by the anticipated prediction residual calculator and corresponds to the n-th still picture, a coder that executes compression coding of the picture signal corresponding to the n-th still picture in accordance with control by the compression ratio controller, and supplies the anticipated prediction residual calculator with an actual prediction residual that is produced through a processing process of the compression coding and corresponds to the n-th still picture, and a recorder that records the picture signal that has been subjected to compression coding by the coder in the information recording medium.

In the picture signal processing device and method, program, and video camera, an intra prediction residual and an inter prediction residual are calculated for a still picture constructing a moving picture, and the pseudo prediction residual corresponding to the still picture is produced by using at least one of the intra prediction residual or inter prediction residual. Furthermore, the pseudo prediction residual corresponding to the n-th still picture is corrected based on a pseudo prediction residual corresponding to a previous still picture of the n-th still picture and the actual prediction residual corresponding to the previous still picture of the n-th still picture. Thus, the anticipated prediction residual corresponding to the n-th still picture is calculated. In addition, the compression ratio when the picture signal corresponding to the n-th still picture is compression-coded is controlled based on the calculated anticipated prediction residual corresponding to the n-th still picture. In accordance with this control, the picture signal corresponding to the n-th still picture is subjected to compression coding. Moreover, the actual prediction residual that is produced in the processing process of the compression coding and corresponds to the n-th still picture is supplied for the processing of the anticipated prediction residual calculation.

[Effect of the Invention]

The present invention allows the prediction residual of a coding-target picture to be predicted accurately before actual coding of the coding-target picture.

[Brief Description of the Drawings]

[Fig. 1] Fig. 1 is a block diagram illustrating a configuration example of a picture signal processing device to which the present invention is applied.

[Fig. 2] Fig. 2 is a block diagram illustrating a configuration example of a pseudo prediction residual producer of Fig. 1.

[Fig. 3] Fig. 3 is a block diagram illustrating a configuration example of a prediction residual anticipator of Fig. 1.

[Fig. 4] Fig. 4 is a block diagram illustrating a configuration example of a target code amount decider of Fig. 1.

[Fig. 5] Fig. 5 is a flowchart for explaining picture compression processing by the picture signal processing device.

[Fig. 6] Fig. 6 is a flowchart for explaining a step S1 of Fig. 5 in detail.

[Fig. 7] Fig. 7 is a flowchart for explaining a step S2 of Fig. 5 in detail.

[Fig. 8] Fig. 8 is a flowchart for explaining a step S3 of Fig. 5 in detail.

[Fig. 9] Fig. 9 is a diagram showing VBR target code amounts BIT_VBR(n) for a certain sequence.

[Fig. 10] Fig. 10 is a diagram showing target code amounts BIT_TGT(n) for a certain sequence.

[Fig. 11] Fig. 11 is a diagram showing the changes of the target code amount BIT_TGT(n) as a function of the degree of difficulty of a sequence.

[Fig. 12] Fig. 12 is a block diagram illustrating a configuration example of a coder 5 of Fig. 1.

[Fig. 13] Fig. 13 is a diagram showing the relationships between a quantization scale and the logarithm of a generated code amount.

[Fig. 14] Fig. 14 is a diagram showing the relationships between a quantization scale and the logarithm of a generated code amount normalized with a prediction residual.

[Fig. 15] Fig. 15 is a diagram showing the relationship, approximated by a quadratic function, between a quantization scale and the logarithm of a generated code amount normalized with a prediction residual.

[Fig. 16] Fig. 16 is a flowchart for explaining coding processing for an I-picture at the beginning of a sequence.

[Fig. 17] Fig. 17 is a block diagram illustrating a configuration example of a digital video camera to which the invention is applied.

[Fig. 18] Fig. 18 is a block diagram illustrating a configuration example of a personal computer to which the invention is applied.

[Description of Reference Numerals]

1 picture signal processing device, 2 pseudo prediction residual producer, 3 prediction residual anticipator, 4 target code amount decider, 5 coder, 11 intra predictor, 12 inter predictor, 13, 14 differential unit, 15 comparator, 21 prediction residual calculator, 31 VBR assigner, 32 CBR assigner, 33 comparator, 41 intra predictor, 42 intra prediction residual calculator, 43 rate controller, 45 quantizer, 201 camera unit, 222 compressor, 301 CPU, 311 recording medium

[Best Mode for Carrying out the Invention]

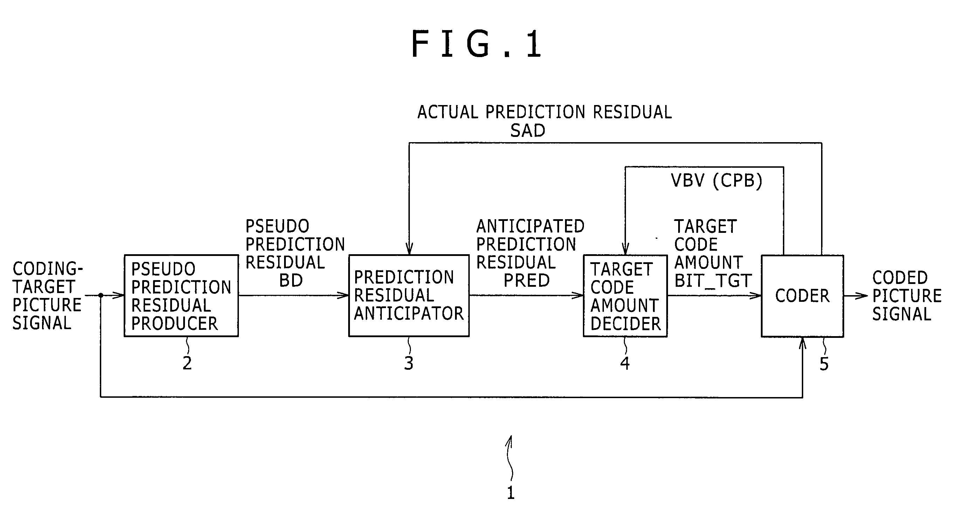

One embodiment of the present invention will be described below. Fig. 1 shows a configuration example of a picture signal processing device to which the invention is applied. A picture signal processing device 1 subjects an input moving picture signal (hereinafter, described as a coding-target picture signal) to compression coding to thereby produce a coded picture signal having a data amount and a bit rate that are smaller and lower than those of the coding-target picture signal. The picture signal processing device 1 includes a pseudo prediction residual producer 2, a prediction residual anticipator 3, a target code amount decider 4, and a coder 5.

The pseudo prediction residual producer 2 calculates, based on the input coding-target picture signal, the pseudo value of a prediction residual SAD (hereinafter, described as a pseudo prediction residual BD) and outputs the calculated pseudo prediction residual BD to the prediction residual anticipator 3. The prediction residual SAD is calculated when the coding-target picture signal is actually coded in the subsequent-stage coder 5. Hereinafter, the pseudo prediction residual corresponding to the coding-target picture signal of the n-th picture (frame picture or field picture) will be described as a pseudo prediction residual BD(n).

The prediction residual anticipator 3 corrects the pseudo prediction residual BD(n) that is input from the pseudo prediction residual producer 2 and corresponds to the n-th picture, based on a pseudo prediction residual BD(n-1) corresponding to the coding-target picture signal of the n-1-th picture and a prediction residual SAD(n-1) that is input from the coder 5 and corresponds to the coding-target picture signal of the n-1-th picture. Subsequently, the prediction residual anticipator 3 outputs an anticipated prediction residual PRED(n) obtained as the correction result to the target code amount decider 4.

The target code amount decider 4 calculates two kinds of target code amounts based on the pseudo prediction residual PRED(n) input from the prediction residual anticipator 3. One is the target code amount when VBR (Variable Bit Rate) is applied to the coding of the n-th picture (hereinafter, described as a VBR target code amount BIT_VBR(n)). The other is the target code amount when CBR (Constant Bit Rate) is applied thereto (hereinafter, described as a CBR target code amount BIT_CBR(n)). After the calculation, the target code amount decider 4 outputs one of these target code amounts as a target code amount BIT_TGT(n) to the coder 5.

Furthermore, the coder 5 notifies the target code amount decider 4 of the data amount occupying the VBV buffer (or CPB buffer), and the target code amount decider 4 calculates a VBV target code amount BIT_VBV(n) based on the data amount occupying the VBV buffer (or CPB buffer). Thus, if the VBV target code amount BIT_VBV(n) is smaller than the VBR target code amount BIT_VBR(n) and the CBR target code amount BIT_CBR(n), the VBV target code amount BIT_VBV(n) can be set as the target code amount BIT_TGT. The VBV buffer (or CPB buffer) is a virtual buffer provided in the coder 5, and monitors the actual generated code amount so that overflow and underflow do not occur at the time of decoding of a coded picture signal. The VBV buffer is the term in the MPEG2, while the CPB buffer is the term in the MPEG4-AVC (Advanced Video Coding).

The coder 5 is a coding device to which the motion-compensated predictive coding method is applied, i.e., a coding device based on e.g. the MPEG2 system, the MPEG4 system, the MPEG4-AVC system, or the like. The coder 5 subjects an input coding-target picture signal to compression coding in accordance with the target code amount BIT_TGT input from the target code amount decider 4, to thereby produce a coded picture signal. In addition, the coder 5 outputs to the prediction residual anticipator 3 the actual prediction residual SAD that is calculated through the processing process of the compression coding.

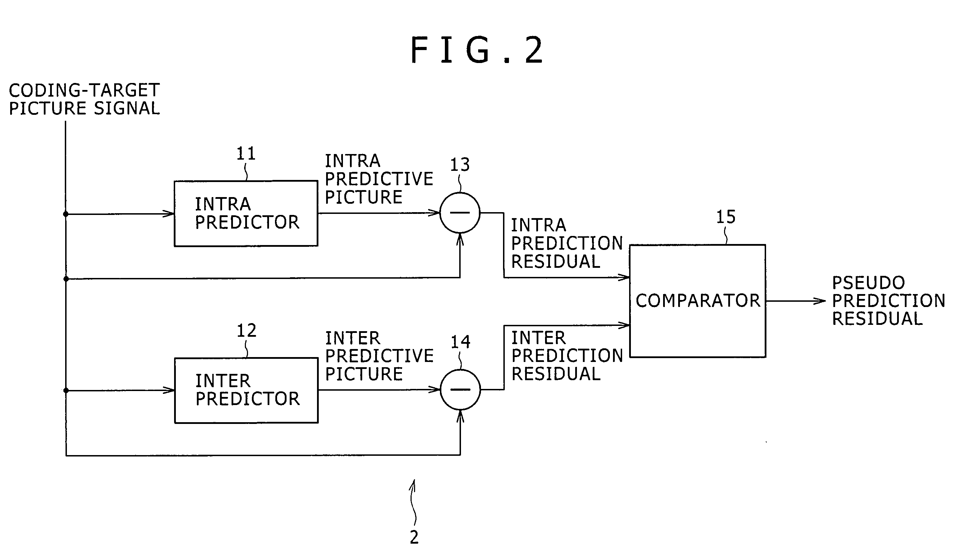

Fig. 2 shows a configuration example of the pseudo prediction residual producer 2. Referring to the configuration example of Fig. 2, an intra predictor 11 applies intraframe prediction to an input coding-target picture signal to thereby produce an intra predictive picture, and outputs it to a differential unit 13. An inter predictor 12 applies interframe prediction to the input coding-target picture signal to thereby produce an inter predictive picture, and outputs it to a differential unit 14. It is unnecessary that the intra predictor 11 and the inter predictor 12 can produce an intra predictive picture and an inter predictive picture at the same accuracy as that by e.g. the intra predictor and inter predictor included in the coder 5, to which the MPEG2 system, the MPEG4 system, the MPEG4-AVC system or the like is applied. It is sufficient for the intra predictor 11 and the inter predictor 12 to be capable of producing an intra predictive picture and an inter predictive picture that show an approximately similar tendency to that of pictures produced by the predictors in the coder 5.

The differential unit 13 calculates the difference between the intra predictive picture produced by the intra predictor 11 and the picture of the corresponding coding-target picture signal, and outputs the calculation result as an intra prediction residual to a comparator 15. The differential unit 14 calculates the difference between the inter predictive picture produced by the inter predictor 12 and the picture of the corresponding coding-target picture signal, and outputs the calculation result as an inter prediction residual to the comparator 15. The comparator 15 compares the intra prediction residual input from the differential unit 13 with the inter prediction residual input from the differential unit 14 on each macro block basis, and employs the smaller as the pseudo prediction residual BD to output it to the subsequent-stage prediction residual anticipator 3. The region unit of the comparison is not limited to a macro block, but the comparison may be carried out for each region arising from division of a coding-target picture based on any division unit.

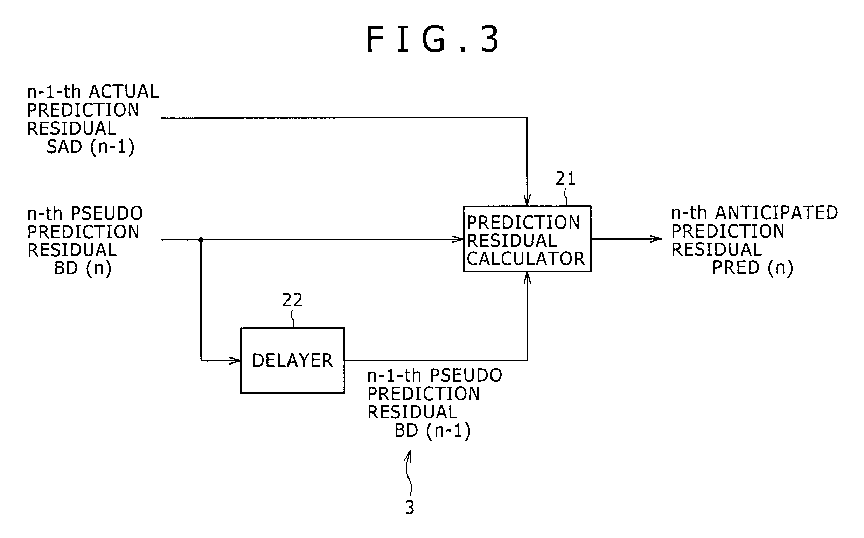

Fig. 3 shows a configuration example of the prediction residual anticipator 3. Referring to the configuration example of Fig. 3, the pseudo prediction residual BD(n) corresponding to the n-th (n=1, 2, ···) picture from the pseudo prediction residual producer 2 is input to a prediction residual calculator 21 and a delayer 22. The prediction residual calculator 21 calculates the anticipated prediction residual PRED(n) corresponding to the coding-target picture signal of the n-th picture by, as shown in Equation (1), adding a value G(SAD(n-1) - BD(n-1)) to the pseudo prediction residual BD(n) that is input from the pseudo prediction residual producer 2 and corresponds to the n-th picture. The value G(SAD(n-1) - BD(n-1)) is obtained by multiplying by an adjustment coefficient G the difference between the pseudo prediction residual BD(n-1) corresponding to the coding-target picture signal of the n-1-th picture that results from delaying by the delayer 22 by one picture and the prediction residual SAD(n-1) that is actually calculated by the coder 5 and corresponds to the coding-target picture signal of the n-1-th picture. The adjustment coefficient G is a positive value equal to or smaller than 1, and is e.g. 0.9.

$$PRED(n) = BD(n) + G(SAD(n-1) - BD(n-1)) \quad (1)$$

Instead of the pseudo prediction residual BD(n-1) and the prediction residual SAD(n-1) corresponding to the coding-target picture signal of the n-1-th picture, the pseudo prediction residual and prediction residual corresponding to the coding-target picture signal of a picture before the n-1-th picture may be used. For example, the pseudo prediction residual BD(n-2) and the prediction residual SAD(n-2) corresponding to the n-2-th picture may be used.

However, since the 0-th picture does not exist, the prediction residual anticipator 3 cannot calculate the anticipated prediction residual PRED(1) corresponding to the first picture. Therefore, the prediction residual anticipator 3 calculates the anticipated prediction residuals PRED corresponding to pictures subsequent to the second picture. Note that control of the compression ratio of the coding-target picture signal corresponding to the first picture will be described later.

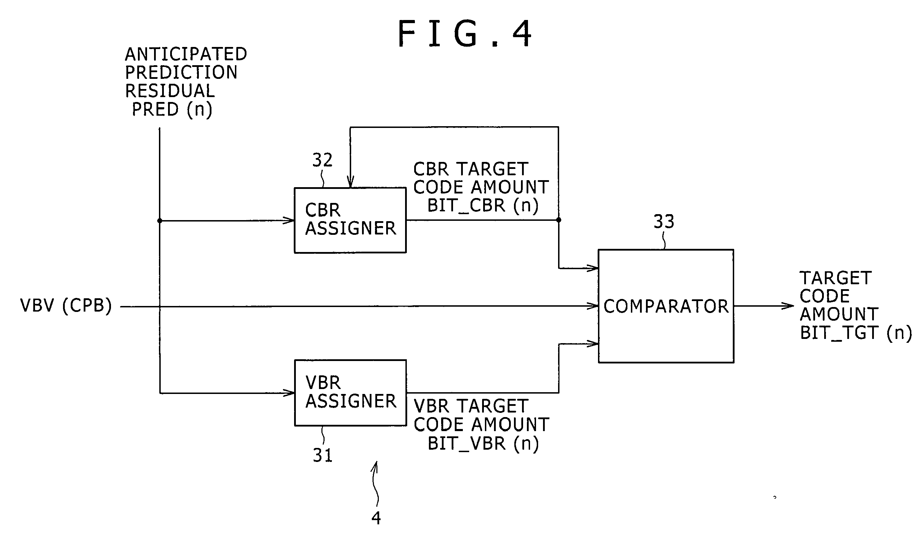

Fig. 4 shows a configuration example of the target code amount decider 4. Referring to the configuration example of Fig. 4, a VBR assigner 31 calculates the VBR target code amount BIT_VBR(n) by multiplying the anticipated prediction residual PRED(n) input from the prediction residual anticipator 3 by a predetermined coefficient k (e.g., 0.2) as shown in Equation (2), or by using a function f(PRED(n)) that includes the anticipated prediction residual PRED(n) input from the prediction residual anticipator 3 as an independent variable as shown in Equation (3).

$$BIT\_VBR(n) = k \cdot PRED(n) \quad (2)$$

$$BIT\_VBR(n) = f(PRED(n)) \quad (3)$$

As the coefficient k and the function f(x), any value and funciton may be optionally employed depending on the picture quality of a coding-target picture signal and the use purpose of a coded picture signal. Furthermore, the coefficient k and the function f(x) may be changed depending on the picture type of a picture.

A CBR assigner 32 calculates, based on the anticipated prediction residual PRED(n) input from the prediction residual anticipator 3, the CBR target code amount BIT_CBR(n) with using one of Equations (4-1) to (4-3) depending on the picture type of the coding-target picture signal so that the generated code amount when the coding-target picture signal is coded is a predetermined fixed value on a GOP (Group Of Picture) basis. Subsequently, the CBR assigner 32 outputs the calculated CBR target code amount BIT_eBR(n) to a comparator 33.

$$CBR \text{ target code amount } BIT\_CBR(n)\_I \text{ (when the n-th}$$

$$\text{picture is an I-picture)}$$

$$= R/(1 + (Np \cdot PREDp)/(PRED(n) \cdot Kp) + (Nb \cdot PREDb)/(PRED(n) \cdot Kb)) \quad (4-1)$$

CBR target code amount BIT_CBR(n)_P (when the n-th picture is a P-picture)

$$= R/(Np + (Nb \cdot PREDb \cdot Kp)/(PRED(n) \cdot Kb)) \quad (4\text{-}2)$$

CBR target code amount BIT_CBR(n)_B (when the n-th picture is a B-picture)

$$= R/(Nb + (Np \cdot PREDp \cdot Kb)/(PRED(n) \cdot Kp)) \quad (4\text{-}3)$$

In Equations (4-1) to (4-3), R is the virtual buffer value indicating the amount of not-yet-assigned codes that have not been assigned to any picture, of the codes that are allocated to a GOP in advance. Every time one of Equations (4-1) to (4-3) is calculated, the calculation result is fed back, so that R becomes the value resulting from subtraction of the fed-back value from the original R used for obtaining this calculation result. For example, when the picture types of pictures in a GOP are in the order of I, B, B, P, ···, coding is carried out in the order of I, P, B, B, P, ···, Therefore, initially an initial value is substituted for R in Equation (4-1) so that BIT_CBR(n)_I is calculated. Subsequently, the value obtained by subtracting the calculated BIT_CBR(n)_I from the initial value is substituted for R in Equation (4-2) so that BIT_CBR (n)_p is calculated. That is, every time a picture is coded, the target code amount of the picture is subtracted from the value of R.

Np is the number of the P-pictures for which the target code amount BIT_CBR(n)_P has not been calculated yet, of the total pictures included in a GOP. Nb is the number of the B-pictures for which the target code amount BIT_CBR(n)_B has not been calculated yet, of the total pictures included in a GOP. PREDp is the anticipated prediction residual corresponding to the P-picture that is previous to and the closest to the picture for which the target code amount BIT_CBR(n) is to be calculated. PREDb is the anticipated prediction residual corresponding to the B-picture that is previous to and the closest to the picture for which the target code amount BIT_CBR(n) is to be calculated. Kp is the weighting factor for a P-picture. Kb is the weighting factor for a B-picture.

The CBR target code amount BIT_CBR(n) may be calculated by using Equations (5-1) to (5-3) employed in the MPEG2 TM (Test Model) 5 Step1, instead of Equations (4-1) to (4-3), depending on the picture type of a coding-target picture signal.

Target code amount BIT_CBR(n)_I (when the n-th picture is an I-picture)

$$= R/(1 + (Np \cdot Xp)/(Xi \cdot Kp) + (Nb \cdot Xb)/(Xi \cdot Kb)) \quad (5\text{-}1)$$

Target code amount BIT_CBR(n)_P (when the n-th picture is a P-picture)

$$= R/(Np + (Nb \cdot Xb \cdot Kp)/(Xp \cdot Kb)) \quad (5\text{-}2)$$

Target code amount BIT_CBR(n)_B (when the n-th picture is a B-picture)

$$= R/(Nb + (Np \cdot Xp \cdot Kb)/(Xb \cdot Kp)) \quad (5-3)$$

In Equations (5-1) to (5-3), R is the amount of remaining codes of the codes that are allocated to a GOP in advance. Every time one of Equations (5-1) to (5-3) is calculated, R becomes the value obtained by subtracting the previous calculation result from the original R used in the previous calculation. For example, when the picture types of pictures in a GOP are in the order of I, B, B, P, ⋯, coding is carried out in the order of I, P, B, B, P, ⋯. Therefore, initially an initial value is substituted for R in Equation (5-1) so that BIT_eBR(n)_I is calculated. Subsequently, the value obtained by subtracting the code amount of the coded I-picture from the initial value is substituted for R in Equation (5-2) so that BIT_CBR(n)_P is calculated. That is, every time a picture is coded, the actual code amount of the picture is subtracted from the value of R.

Np is the number of the P-pictures for which the target code amount BIT_CBR(n)_P has not been calculated yet, of the total pictures included in a GOP. Nb is the number of the B-pictures for which the target code amount BIT_CBR(n)_B has not been calculated yet, of the total pictures included in a GOP. Xi, Xp, and Xb are the complexities of an I-picture, a P-picture, and a B-picture, respectively. Kp is the weighting factor for a P-picture. Kb is the weighting factor for a B-picture.

The comparator 33 compares the VBR target code amount BIT_VBR input from the VBR assigner 31 with the CBR target code amount BIT_CBR input from the CBR assigner 32. When the VBR target code amount BIT_VBR is smaller than the CBR target code amount BIT_CBR, the comparator 33 outputs the VBR target code amount BIT_VBR as the target code amount BIT_TGT. When the VBR target code amount BIT_VBR is equal to or larger than the CBR target code amount BIT_CBR, the comparator 33 outputs the CBR target code amount BIT_CBR as the target code amount BIT_TGT.

Alternatively, one of the VBR target code amount BIT_VBR and the CBR target code amount BIT_CBR may be invariably output as the target code amount BIT_TGT in a fixed manner, without a comparison by the comparator 33 between the VBR target code amount BIT_VBR input from the VBR assigner 31 and the CBR target code amount BIT_CBR input from the CBR assigner 32.

Further alternatively, the comparator 33 may decide the target code amount BIT_TGT based on the amount of the data occupying the VBV buffer (or CPB buffer), supplied from the coder 5.

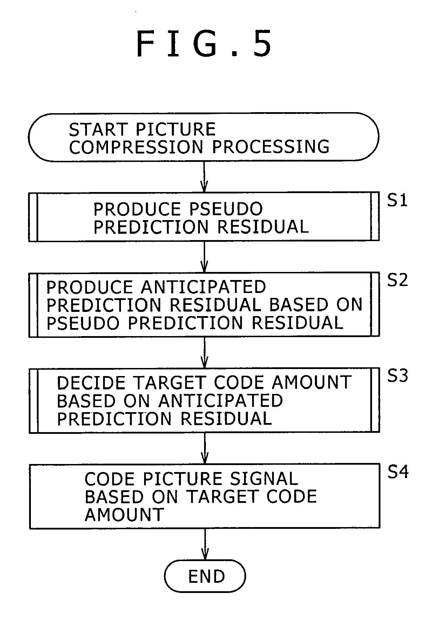

A description will be made below with reference to the flowchart of Fig. 5 about picture compression processing by the picture signal processing device 1 for compression coding of the coding-target picture signal corresponding to the n-th picture.

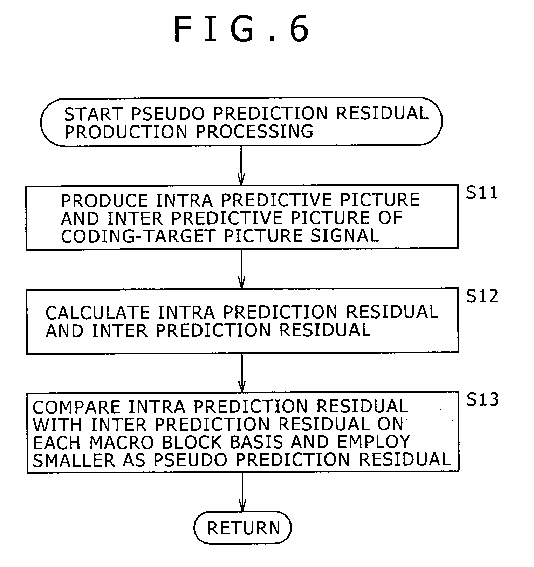

In a step S1, the pseudo prediction residual producer 2 calculates, based on the input coding-target picture signal corresponding to the n-th picture, the pseudo prediction residual BD(n) corresponding to the n-th picture, and outputs it to the prediction residual anticipator 3. The processing in the step S1 will be described in detail below with reference to the flowchart of Fig. 6.

In the step S11, the intra predictor 11 applies intraframe prediction to the input coding-target picture signal of the n-th picture to thereby produce an intra predictive picture, and outputs it to the differential unit 13. Simultaneously, the inter predictor 12 applies interframe prediction to the input coding-target picture signal of the n-th picture to thereby produce an inter predictive picture, and outputs it to the differential unit 14.

In a step S12, the differential unit 13 calculates the difference between the intra predictive picture produced by the intra predictor 11 and the n-th picture, and outputs the calculation result as an intra prediction residual to the comparator 15. Simultaneously, the differential unit 14 calculates the difference between the inter predictive picture produced by the inter predictor 12 and the n-th picture, and outputs the calculation result as an inter prediction residual to the comparator 15.

In a step S13, the comparator 15 compares the intra prediction residual input from the differential unit 13 with the inter prediction residual input from the differential unit 14 for each macro block in the picture, and employs the smaller as the pseudo prediction residual BD(n) to output it to the subsequent-stage prediction residual anticipator 3. This is the end of the detailed description of the processing in the step S1.

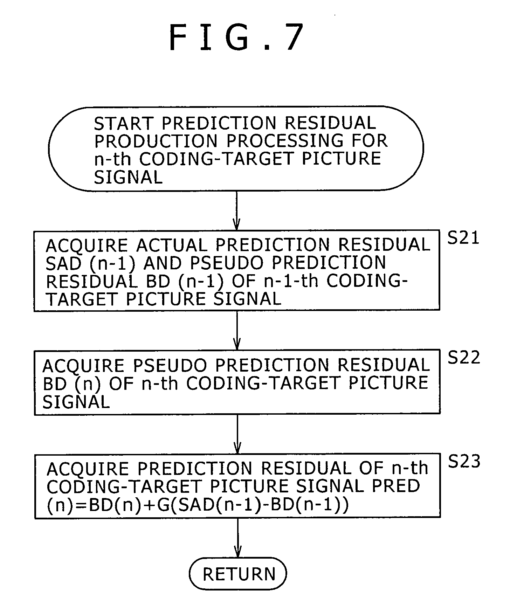

Turning back to Fig. 5, in a step S2, the prediction residual anticipator 3 corrects the pseudo prediction residual BD(n) that is input from the pseudo prediction residual producer 2 and corresponds to the n-th picture, based on the pseudo prediction residual BD(n-1) corresponding to the coding-target picture signal of the n-1-th picture and the actual prediction residual SAD(n-1) that is input from the coder 5 and corresponds to the coding-target picture signal of the n-1-th picture. Subsequently, the prediction residual anticipator 3 outputs the anticipated prediction residual PRED(n) obtained as the correction result to the target code amount decider 4. The processing in the step S2 will be described in detail below with reference to the flowchart of Fig. 7.

In a step S21, the prediction residual calculator 21 acquires from the coder 5 the actual prediction residual SAD (n-1) of the coding-target picture signal of the n-1-th picture, and also acquires from the delayer 22 the pseudo prediction residual BD(n-1) corresponding to the coding-target picture signal of the n-1-th picture. In a step S22, the prediction residual calculator 21 acquires the pseudo prediction residual BD(n) corresponding to the n-th picture from the pseudo prediction residual producer 2.

In a step S23, the prediction residual calculator 21 calculates the anticipated prediction residual PRED(n) corresponding to the coding-target picture signal of the n-th picture by, as shown in Equation (1), adding the value G (SAD(n-1) - BD(n-1)) to the pseudo prediction residual BD(n) that is input from the pseudo prediction residual producer 2 and corresponds to the n-th picture. The value G(SAD(n-1) - BD(n-1)) is obtained by multiplying by the adjustment coefficient G the difference between the pseudo prediction residual BD(n-1) corresponding to the coding-target picture signal of the n-1-th picture that results from delaying by the delayer 22 by one picture and the prediction residual SAD (n-1) that is input from the coder 5 and corresponds to the coding-target picture signal of the n-1-th picture. This is the end of the detailed description of the processing in the step S2.

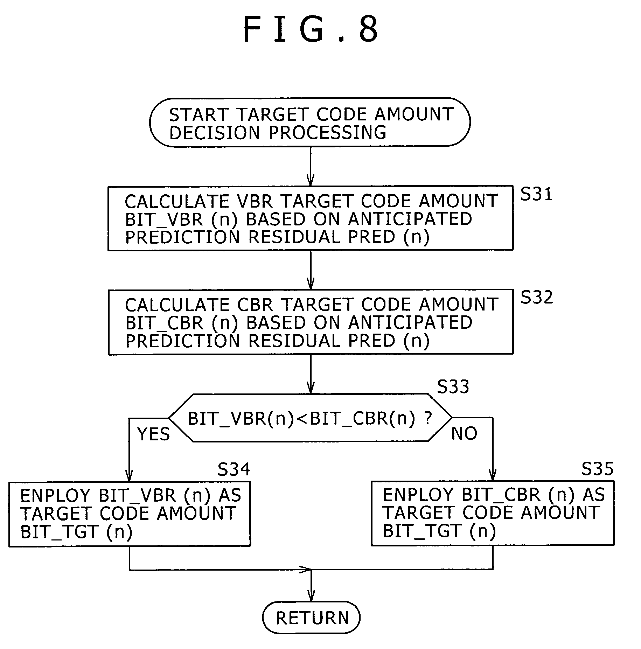

Turning back to Fig. 5, in a step S3, the target code amount decider 4 decides the target code amount BIT_TGT(n) corresponding to the n-th picture based on the anticipated prediction residual PRED(n) that is input from the prediction residual anticipator 3 and corresponds to the n-th picture, and outputs the target code amount BIT_TGT(n) to the coder 5. The processing in the step S3 will be described in detail below with reference to the flowchart of Fig. 8.

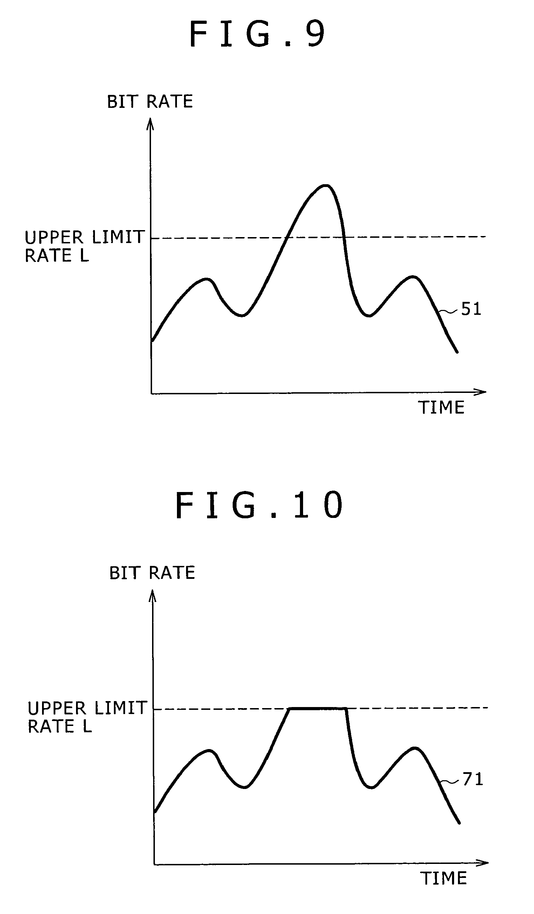

In a step S31, the VBR assigner 31 calculates the VBR target code amount BIT_VBR(n) corresponding to the n-th picture with use of Equation (2) or (3) based on the anticipated prediction residual PRED(n) input from the prediction residual anticipator 3. Fig. 9 shows one example of the VBR target code amount BIT_VBR(n) calculated by the VBR assigner 31 for any sequence (coding-target picture signals in a certain period). In Fig. 9, the abscissa indicates the time passage of the sequence, while the ordinate indicates the bit rate determined depending on the code amounts of plural coded pictures. As indicated by a curve 51 in Fig. 9, the value of the VBR target code amount BIT_VBR(n) varies depending on the complexity (degree of difficulty in coding) of the respective pictures and so on, and thus the bit rate determined depending on the code amounts of coded pictures, which are output from the subsequent-stage coder 5, often surpasses the maximum value of the bit rate (upper limit rate L), targeted in advance.

In a step S32, the CBR assigner 32 calculates, based on the anticipated prediction residual PRED(n) input from the prediction residual anticipator 3, the CBR target code amount BIT_CBR(n) according to the picture type of the coding-target picture signal corresponding to the n-th picture as shown in Equations (4-1) to (4-3) so that the generated code amount when the coding-target picture signal is coded is a fixed value (upper limit rate L in Fig. 9) on a GOP basis.

Although the description has been made as if the processing in the step S31 and the processing in the step S32 are executed at different timings for convenience, these steps are simultaneously executed in actual.

In a step S33, the comparator 33 determines whether or not the VBR target code amount BIT_VBR(n) input from the VBR assigner 31 is smaller than the CBR target code amount BIT_CBR(n) input from the CBR assigner 32. If it is determined that the VBR target code amount BIT_VBR(n) is smaller than the CBR target code amount BIT_CBR (n), the processing sequence proceeds to a step S34, where the comparator 33 outputs the VBR target code amount BIT_VBR(n) as the target code amount BIT_TGT(n) to the subsequent-stage coder 5.

On the contrary, if it is determined that the VBR target code amount BIT_VBR(n) is not smaller than the CBR target code amount BIT_CBR(n) in the step S33, the processing sequence proceeds to a step S35. In the step S35, the comparator 33 outputs the CBR target code amount BIT_CBR(n) as the target code amount BIT_TGT(n) to the subsequent-stage coder 5.

When the same sequence as that in Fig. 9 is employed as an example, as indicated by a curve 71 in Fig. 10, the target code amount BIT_TGT(n) output from the comparator 33 varies depending on the complexity (degree of difficulty in coding) of the respective pictures and so on. However, when the bit rate determined depending on the code amounts of coded pictures, which are output from the subsequent-stage coder 5, reaches the maximum value of the bit rate (upper limit rate L) targeted in advance, the bit rate value plateaus at the upper limit rate L. Furthermore, the switching from the VBR target code amount BIT_VBR(n) to the CBR target code amount BIT_CBR(n) is rapidly carried out attributed to the characteristic that both the VBR target code amount BIT_VBR(n) and the CBR target code amount BIT_CBR(n) are regularly calculated for coding of each picture.

The target code amount decider 4 calculates the target code amount BIT_TGT(n) by use of the anticipated prediction residual PRED obtained before actual coding, and hence can reflect whether small or large the code amount of the picture to be coded is. Furthermore, the target code amount decider 4 can reflect a scene change and the tendency of movement of the sequence before coding of a picture, and therefore can assign an adequate code amount. Accordingly, deterioration of the picture quality can be suppressed. In addition, when the method employing Equations (4-1) to (4-3) is used, generated codes resulting from actual coding are not fed back for use. This feature provides a characteristic that the offsets between the target code amount and actual resultant code amount are not readily accumulated, and hence offers stabilized operation.

Turning back to Fig. 5, in a step S4, the coder 5 executes compression coding of the input coding-target picture signal corresponding to the n-th picture in accordance with the target code amount BIT_TGT(n) that is input from the target code amount decider 4 and corresponds to the n-th picture, to thereby produce a coded picture signal. Any method may be used as the method for executing compression coding in accordance with the target code amount BIT_TGT(n) to thereby produce a coded picture signal. For example, a method is available that uses an algorithm, employed in the MPEG2 TM5 Step2, of monitoring the generated code amount point by point on each macro block basis and thus adjusting the compression ratio to thereby achieve a target code amount.

Furthermore, in the MPEG2 TM5 Step2, e.g. a method is available in which virtual buffers (entities indicating the difference between a target code amount and a generated code amount) independently provided for each picture type are integrated into a single virtual buffer so that the single virtual buffer common to the respective pictures is used. This method is more effective since the operation of the coder 5 can be stabilized. This method has been proposed by the present assignee, and has been disclosed in Japanese Patent Laid-open No. 2003-230151.

In Japanese Patent Laid-open No. 2003-230151, the difference of the generated bit amount among different picture types is normalized based on the ratio of the global complexities of pictures in particular. In contrast, the coder 5 calculates a target code amount directly from an anticipated prediction residual.

When an I-picture is coded, a virtual buffer occupation amount dj is calculated with use of Equation (6-1), and then the virtual buffer occupation amount dj is converted into a quantization scale code Qi with use of Equation (7-1). When a P-picture is coded, the virtual buffer occupation amount dj is calculated with use of Equation (6-2), and then the virtual buffer occupation amount dj is converted into a quantization scale code Qp with use of Equation (7-2). When a B-picture is coded, the virtual buffer occupation amount dj is calculated with use of Equation (6-3), and then the virtual buffer occupation amount dj is converted into a quantization scale code Qb with use of Equation (7-3).

$$\text{dj = d0 + B(j-1) - (Ti} \cdot \text{(j-1))/MB\_COUNT} \quad (6\text{-}1)$$

$$\text{dj = d0 + (Last\_Ibit/Tp)} \cdot \text{(B(j-1) - (Tp} \cdot \text{(j-1))/MB\_COUNT)} \quad (6\text{-}2)$$

$$\text{dj = d0 + (Last\_Ibit/Tb)} \cdot \text{(B(j-1) - (Tb} \cdot \text{(j-1))/MB\_COUNT)} \quad (6\text{-}3)$$

$$\text{Qi = dj} \times \text{QP/r} \quad (7\text{-}1)$$

$$\text{Qp = dj} \times \text{QP/r} \quad (7\text{-}2)$$

$$\text{Qb = dj} \times \text{QP/r+c} \quad (7\text{-}3)$$

d0 is the initial occupation amount of the virtual buffer. B(j-1) is the total sum of generated code amounts of the macro blocks from the first macro block to the j-1-th macro block in a picture to be coded. Last_Ibit is the generated code amount of the I-picture that has been coded last. Ti, Tp, and Tb are the target code amounts of an I-picture, a P-picture, and a B-picture, respectively. MB_COUNT is the number of macro blocks in a picture to be coded. QP is the value recommended in the MPEG2 TM5 (specifically, 31). r is the reaction parameter. c is the correction value (e.g., 2).

The multiplication of (Last_Ibit/Tp) in Equation (6-2) and the multiplication of (Last_Ibit/Tb) in Equation (6-3) are equivalent to correction against the use of a single virtual buffer. The relative weighting at the time of coding may be changed depending on a picture type, like the addition of the correction value c in Equation (7-3).

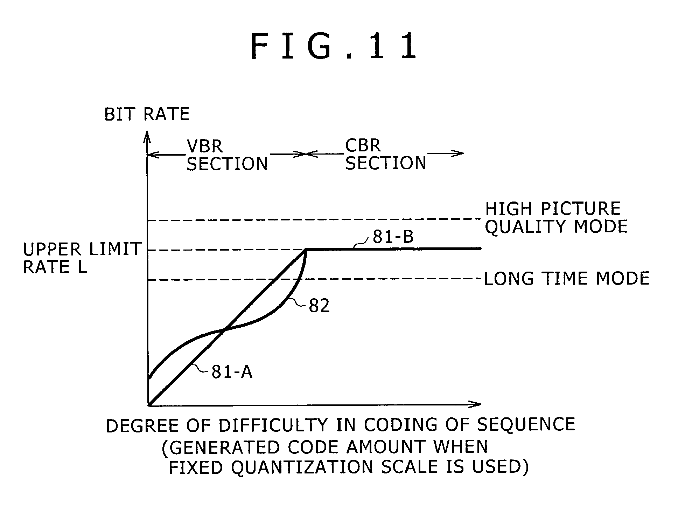

Fig. 11 shows the relationship between the degree of difficulty in coding of a coding-target picture signal (complexity of a picture) input to the coder 5, and the bit rate of a coded picture signal output from the coder 5.

When the degree of difficulty of a picture, indicated by the abscissa of Fig. 11, is comparatively low, the VBR is applied to the coding of the coding-target picture signal, and the relationship between the degree of difficulty and bit rate is indicated by a straight line 81A. Therefore, as the degree of difficulty in coding increases, the generated code amount also increases. When the degree of difficulty of a picture further increases and thus the generated code amount reaches the upper limit rate L, the CBR is applied and hence the bit rate plateaus as indicated by a straight line 81B. The slope of the straight line 81A in Fig. 11 corresponds with the coefficient k in Equation (2). Furthermore, if the function f in Equation (3) is optionally determined depending on an application, e.g. a characteristic indicated by a curve 82 can be offered when the VBR is applied.

The above-described feature allows ensuring of the upper limit of the code amount of a coded picture signal output from the coder 5. Accordingly, when coded picture signals output from the coder 5 are recorded in an information recording medium for example, the maximum recordable time of the medium can be ensured.

If the upper limit rate L when the CBR is applied is set to a value higher than a normal value, a high picture quality mode that allows pictures to be coded with a higher picture quality can be offered. On the contrary, setting the upper limit rate L to a value lower than a normal value can offer a long time mode that allows a recording medium with a certain capacity to have a longer recordable time.

In addition, changing the value of the coefficient k in Equation (2) or changing the function f in Equation (3) can also realize the high picture quality mode and long time mode.

Through the above-described steps, the coding of the coding-target picture signal corresponding to the n-th picture is completed. Subsequently, as picture compression processing for the coding-target picture signal corresponding to the n+1-th picture, the step S1 and the subsequent steps are carried out. This is the end of the description of the picture compression processing.

In the above-described picture compression processing, for calculation of the anticipated prediction residual PRED(n), the actual prediction residual SAD(n-1) of the previous picture is utilized. Therefore, the anticipated prediction residual PRED(1) for the first picture (e.g., I-picture at the beginning of a sequence) is not calculated. Accordingly, the target code amount BIT_TGT(1) for the first picture is also not calculated. For that reason, for the first picture, the coder 5 calculates such an adequate quantization scale QP that codes of a preset target code amount BIT are generated, and then codes the first picture.

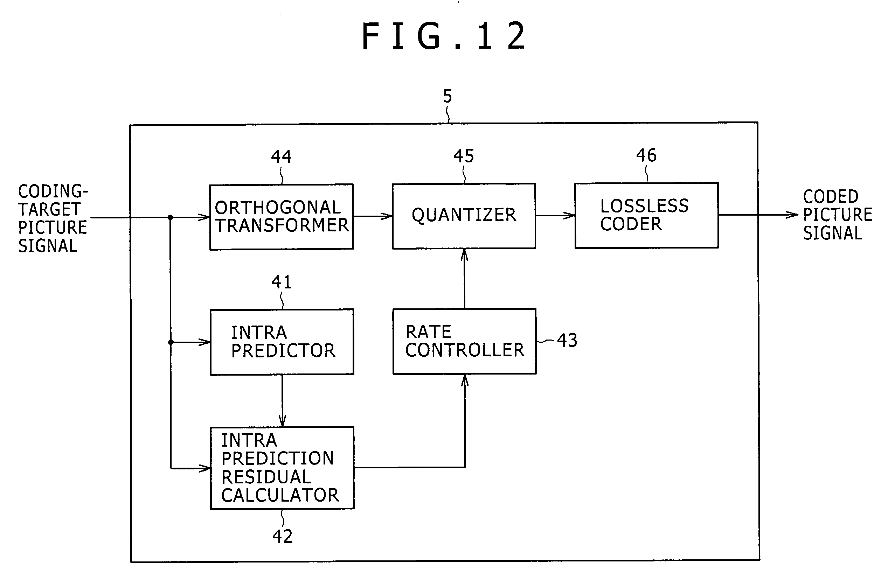

Fig. 12 shows a configuration example of the coder 5, limited to the part pertinent to coding of the first picture. Referring to Fig. 12, the coding-target picture signal of an I-picture from the previous stage is input to an intra predictor 41, an intra prediction residual calculator 42, and an orthogonal transformer 44.

The intra predictor 41 produces an intra predictive picture corresponding to the input coding-target picture signal of the I-picture and outputs it to the intra prediction residual calculator 42. The intra prediction residual calculator 42 calculates an intra prediction residual, which is the difference between the intra predictive picture input from the intra predictor 41 and the I-picture as the original picture, and outputs it to a rate controller 43. The rate controller 43 calculates the quantization scale QP based on the intra prediction residual that is input from the intra prediction residual calculator 42 and corresponds to the I-picture, and outputs it to a quantizer 45. The orthogonal transformer 44 executes orthogonal transform processing such as the discrete cosine transform or Karhunen-Loeve transform for the input coding-target picture signal of the I-picture, and outputs transform coefficients obtained as the processing result to the quantizer 45. The quantizer 45 quantizes the transform coefficients input from the orthogonal transformer 44 in accordance with the quantization scale QP input from the rate controller 43, and outputs the quantized transform coefficients to a lossless coder 46. The lossless coder 46 codes the quantized transform coefficients input from the quantizer 45 to thereby produce a coded picture signal.

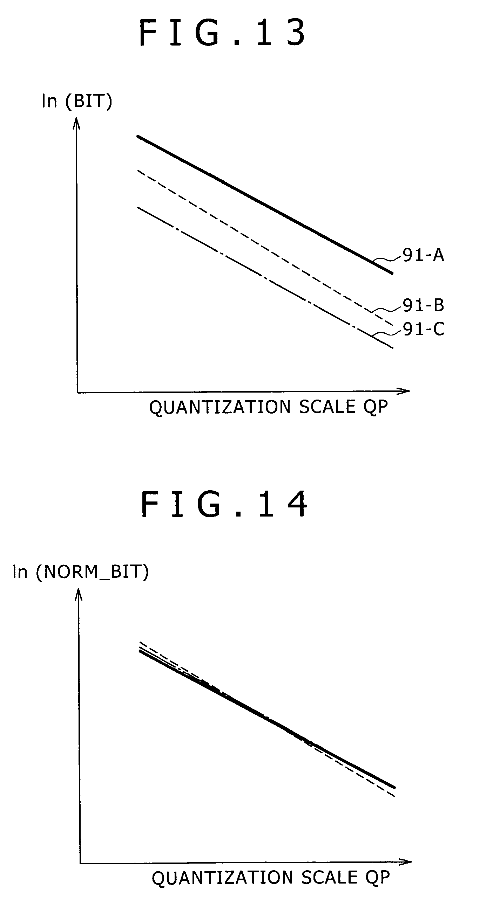

A description will be made below about the processing by the rate controller 43, which calculates the quantization scale QP based on an intra prediction residual corresponding to an I-picture. Line segments 91-A, 91-B, and 91-C in Fig. 13 show the relationships between the quantization scale QP and the generated code amount BIT obtained when I-pictures at the beginnings of different sequences are coded, with the value of the quantization scale QP being variously changed. In Fig. 13, the ordinate indicates the logarithm ln(BIT) of the generated code amount BIT, while the abscissa indicates the quantization scale QP.

As is apparent from the line segments 91-A to 91-C, in any sequence, the logarithm ln(BIT) of the generated code amount decreases almost linearly as the quantization scale QP increases. This relationship between the logarithm ln(BIT) of the generated code amount and the quantization scale QP is generally well known.

When the generated code amounts BIT resulting from the coding of the I-pictures at the beginnings of the respective sequences are each normalized with an intra prediction residual ERROR of the corresponding I-picture to thereby obtain values NORM_BIT as shown in Equation (8). Then the logarithms ln(NORM_BIT) of the values NORM_BIT are calculated and plotted with being associated with the quantization scale QP, it can be confirmed in Fig. 14 that the line segments 91-A, 91-B, and 91-C, which are independent of each other in Fig. 13, are aggregated into one straight line form.

$$\text{NORM\_BIT} = \text{BIT} \cdot (\text{NORM}/\text{ERROR}) \quad (8)$$

NORM is any constant. In Fig. 14, the ordinate indicates the logarithm ln(NORM_BIT) of the generated code amount BIT normalized with the intra prediction residual ERROR, while the abscissa indicates the quantization scale QP.

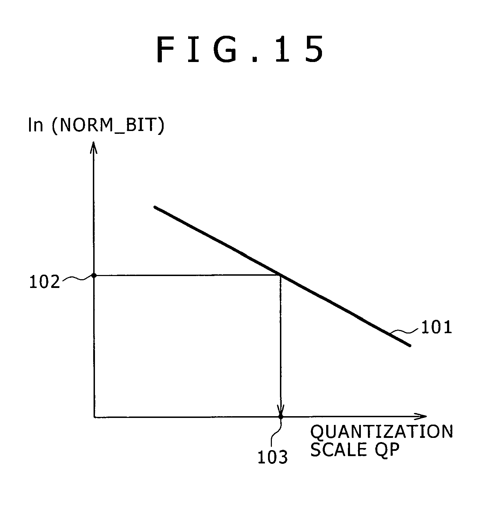

These aggregated line segments can be approximated by one straight line (hereinafter, described as a representative straight line) as shown in Fig. 15. When this representative straight line 101 is described by a linear function including the quantization scale QP as an independent variable, the line 101 is expressed as Equation (9). In Equation (9), a is the slope of the representative straight line 101, and b is the intercept of the line 101 with the ordinate. These a and b need be calculated in advance based on the plotting result shown in Fig. 14.

$$\ln(\text{BIT} \cdot (\text{NORM}/\text{ERROR})) = a \cdot \text{QP} + b \quad (9)$$

Transforming Equation (9) results in Equation (10), which allows calculation of the quantization scale QP for realizing a desired generated code amount BIT.

$$\text{QP} = (\ln(\text{BIT} \cdot (\text{NORM}/\text{ERROR})) - b)/a \quad (10)$$

Therefore, employment of Equation (10) in the rate controller 43 allows calculation of the quantization scale QP that can offer a desired generated code amount BIT when an I-picture at the beginning of a sequence is coded. This calculation based on Equation (10) is equivalent to operation in which, in Fig. 15, a quantization scale 103 is obtained from a desired generated code amount 102 through the representative straight line 101. The rate controller 43 is supplied with BIT, NORM, a, and b included in Equation (10) in advance. As the intra prediction residual ERROR in Equation (10), an intra prediction residual supplied from the intra prediction residual calculator 42 to the rate controller 43 is used. Alternatively, if necessary, the intra predictor 11 included in the pseudo prediction residual anticipator 3 may be used for the supply of an intra prediction residual.

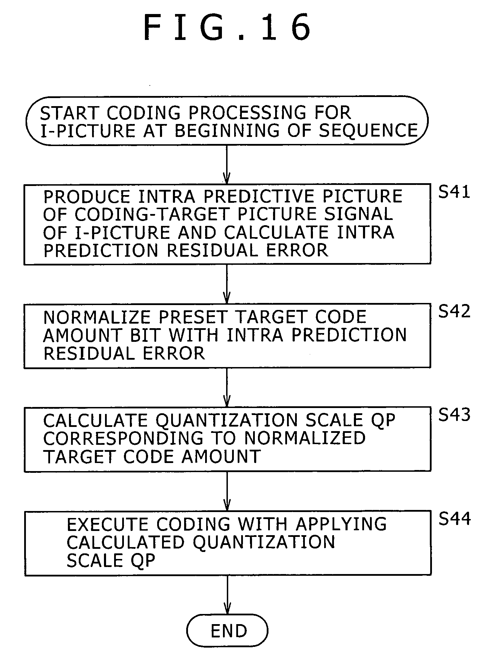

The operation of the coder 5 of coding an I-picture at the beginning of a sequence will be described below with reference to Fig. 16. In a step S41, the intra predictor 41 produces an intra predictive picture corresponding to the input coding-target picture signal of the I-picture and outputs it to the intra prediction residual calculator 42. The intra prediction residual calculator 42 calculates an intra prediction residual, which is the difference between the intra predictive picture input from the intra predictor 41 and the I-picture as the original picture, and outputs it to the rate controller 43.

In a step S42, as shown in Equation (8), the rate controller 43 normalizes the preset target code amount BIT with the intra prediction residual ERROR input from the intra prediction residual calculator 42. In a step S43, as shown in Equation (10), the rate controller 43 subtracts b from the logarithm of the normalized target code amount, and divides the subtraction result by a to thereby calculate the quantization scale QP, which is then output to the quantizer 45. During the execution of the processing in the steps S41 to S43, the orthogonal transformer 44 implements orthogonal transform processing for the input coding-target picture signal of the I-picture, and outputs transform coefficients obtained as the processing result to the quantizer 45. In a step S44, the quantizer 45 quantizes the transform coefficients input from the orthogonal transformer 44 in accordance with the quantization scale QP input from the rate controller 43, and outputs the quantized transform coefficients to the lossless coder 46. The lossless coder 46 codes the quantized transform coefficients input from the quantizer 45 to thereby produce a coded picture signal. This is the end of the description of the operation by the coder 5 of coding an I-picture at the beginning of a sequence.

The above-described operation of the coder 5 may be applied not only to an I-picture at the beginning of a sequence but also to e.g. an I-picture immediately after a scene change, and even to a normal I-picture.

The above-described operation offers the following advantages: in the coder 5, a specially large calculation amount and a special circuit configuration that is not included in a normal coding device are unnecessary; the range of sequences to which the operation can be applied is wide; the difference of influence between successful and unsuccessful coding results by the operation is small (even when the operation leads to a non-optimal coding result, the adverse influence thereof is small); and the range of compression ratios to which the operation can be applied is wide.

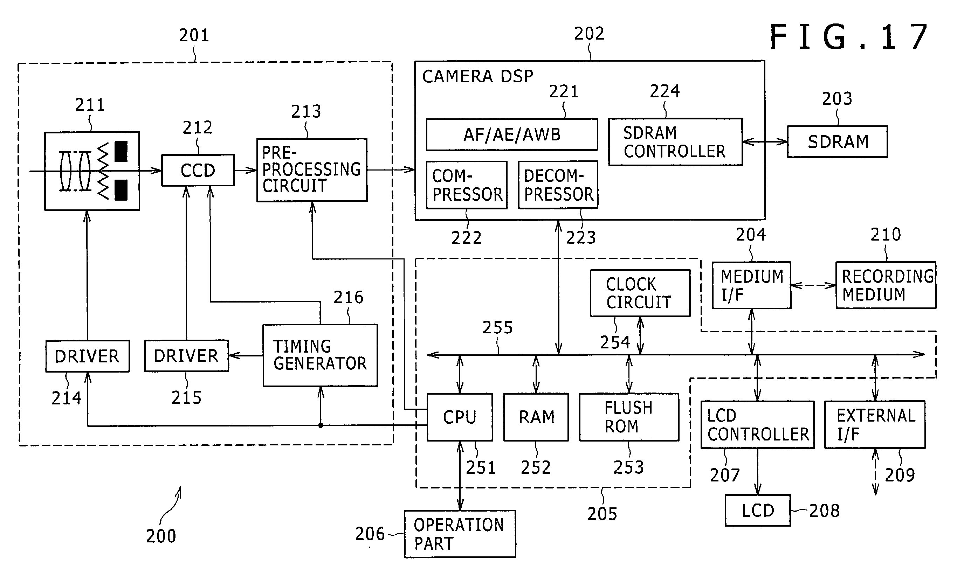

The present invention can be applied also to a digital video camera. Fig. 17 shows a configuration example of a digital video camera to which the invention is applied. A digital video camera 200 captures a picture of a target object to acquire a coding-target picture signal, and subjects the acquired coding-target picture signal to compression coding to thereby produce a coded picture signal in a similar manner to that of the above-described picture signal processing device 1. Subsequently, the digital video camera 200 records the produced coded picture signal in a recording medium.

In a rough classification, the digital video camera 200 includes a camera unit 201, a camera DSP (Digital Signal Processor) 202, and a control unit 205. Furthermore, the digital video camera 200 includes an SDRAM (Synchronous Dynamic Random Access Memory) 203, a medium interface (I/F) 204, an operation part 206, an LCD (Liquid Crystal Display) controller 207, an LCD 208, an external interface (I/F) 209, and a detachable recording medium 210.

As the recording medium 210, any of various media such as so-called memory cards employing a semiconductor memory, optical recording media such as recordable DVDs (Digital Versatile Disks) and recordable CDs (Compact Discs), and magnetic disks is available. In the present embodiment, e.g. a memory card is used as the recording medium 210.

The camera unit 201 includes an optical block 211, a CCD (Charge Coupled Device) 212, a pre-processing circuit 213, an optical block driver 214, a CCD driver 215, and a timing generator 216. The optical block 211 includes a lens, a focus mechanism, a shutter mechanism, an aperture (iris) mechanism, and so on.

The control unit 205 is a micro computer in which a CPU (Central Processing Unit) 251, an RAM (Ransom Access Memory) 252, a flush ROM (Read Only Memory) 253, and a clock circuit 254 are coupled via a system bus 255. The control unit 205 can control the respective units in the digital video camera 200.

The RAM 252 is used mainly as a work area, for e.g. temporal memory of an intermediate result of processing. The flush ROM 253 stores therein various programs to be executed in the CPU 251, and other data necessary for processing. The clock circuit 254 can output the present year, month, day, day of the week, and time.

At the time of capturing of a picture, the control unit 205 controls the optical block driver 214 so that the driver 214 forms a drive signal for operating the optical block 211, to thereby operate the optical block 211. In response to this, the optical block 211 acquires an optical picture of a target object by controlling the focus mechanism, shutter mechanism, and aperture mechanism, and then focuses the optical picture on the CCD 212.

The CCD 212 subjects the picture from the optical block 211 to photoelectric conversion to output the resultant signal, and operates in response to a drive signal from the CCD driver 215. Specifically, the CCD 212 imports therein an optical picture of a target object from the optical block 211, and supplies the pre-processing circuit 213 with the imported picture (picture information) of the target object as an electric signal based on a timing signal from the timing generator 216 controlled by the control unit 205. As described above, the timing generator 216 forms the timing signal for offering predetermined timing, in response to control by the control unit 205. Furthermore, the CCD driver 215 forms a drive signal to be supplied to the CCD 212, based on the timing signal from the timing generator 216.

The pre-processing circuit 213 executes CDS (Correlated Double Sampling) processing for the picture information as an electric signal input from the CCD 212 so that a favorable S/N ratio of the signal is kept, and executes AGC (Automatic Gain Control) processing for the signal to thereby control the gain. In addition, the pre-processing circuit 213 subjects the signal to A/D (Analog/Digital) conversion to thereby form picture data converted into a digital signal (hereinafter, described as a coding-target picture signal), and outputs the signal to the DSP 202.

An AF AE AWB processor 221 in the DSP 202 executes camera signal processing such as AF (Auto Focus), AE (Auto Exposure), and AWB (Auto White Balance) for the coding-target picture signal supplied from the camera unit 1. A compressor 222 executes compression coding of the coding-target picture signal for which the various camera signal processing has been carried out, to thereby produce a coded picture signal. The compressor 222 has a similar configuration and operates in a similar manner to those of the picture signal processing device 1 of Fig. 1, and hence a detailed description therefore is omitted.

The coded picture signal produced by the compressor 222 is recorded in the recording medium 210 via the system bus 255 and the medium I/F 204. A decompressor 223 executes decompression processing (expansion processing) for a coded picture signal retrieved from the recording medium 210 in response to user's operation input to the operation part 206, and supplies the decompressed picture signal to the LCD controller 207 via the system bus 255. The LCD controller 207 converts the format of the supplied picture signal into a format suitable for the LCD 208, and supplies the resultant picture signal to the LCD 208. Thus, the picture corresponding to the coded picture signal recorded in the recording medium 210 is displayed on the screen of the LCD 208.

The external I/F 209 is coupled to e.g. an external personal computer. Thus, through the I/F 209, a coded picture signal supplied from the personal computer is received, and a coded picture signal recorded in the recording medium 210 is supplied to the external personal computer or the like. Furthermore, coupling a communication module to the external I/F 209 allows the digital video camera 200 to be coupled to a network such as the Internet and exchange various data via the network. The external I/F 209 can be provided as a wired interface for IEEE (Institute of Electrical and Electronics Engineers) 1394, USB (Universal Serial Bus) or the like. Alternatively, it can be provided as a wireless interface for light or radio waves. That is, the external I/F 209 may be either interface of wired and wireless interfaces.

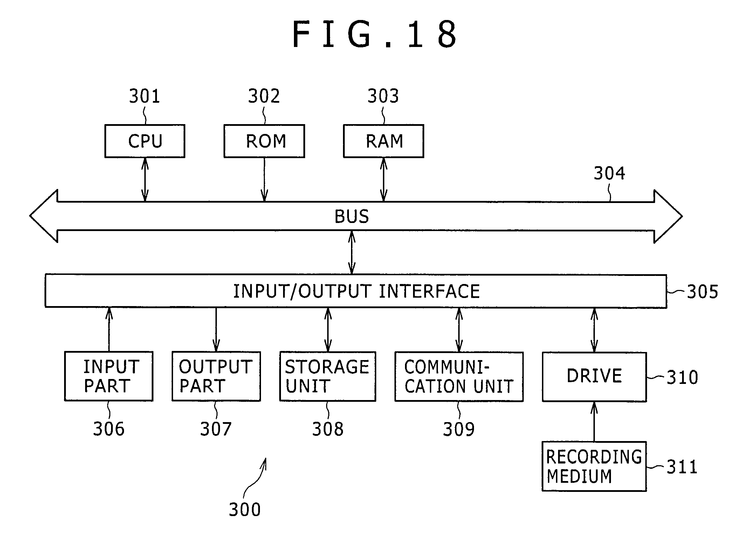

The above-described series of processing can be executed by hardware like the picture signal processing device 1 or the digital video camera 200. Alternatively, the processing may be executed by software. When the series of processing is executed by software, a program constructing the software is installed from a recording medium or the like in a computer incorporated into dedicated hardware, or a general-purpose personal computer 300 that has e.g. the configuration shown in Fig. 18 and is allowed, through installing of various programs therein, to execute its various functions.

The personal computer 300 shown in Fig. 18 includes a CPU 301. The CPU 301 is coupled to an input/output interface 305 via a bus 304. An ROM 302 and an RAM 303 are also coupled to the bus 304.

The input/output interface 305 is coupled to an input part 306 that is formed of input devices such as a keyboard, mouse, and remote controller through which a user inputs operation commands, an output part 307 that outputs video and audio, and a storage unit 308 formed of a hard disk drive or the like that stores programs and various data. Furthermore, the input/output interface 305 is coupled also to a communication unit 309 that executes communication processing via a network typified by the Internet, and a drive 310 that reads and writes data to and from a recording medium 311.

The program for causing the personal computer 300 to execute the above-described series of processing is supplied to the personal computer in the state of being stored in the recording medium 311, followed by being retrieved by the drive 310 so as to be installed in the hard disk drive incorporated into the storage unit 308. The program installed in the storage unit 308 is loaded from the storage unit 308 into the RAM 303 and is executed in response to an instruction from the CPU 301 according to user's operation input to the input part 306.

In the present specification, steps that describe a program recorded in a recording medium encompass not only processing that is time-sequentially executed in accordance with the described order but also processing that is not necessarily executed time-sequentially but executed in parallel or individually.

## Claims

1. A picture signal processing device that executes compression coding of a picture signal for displaying a moving picture in accordance with a predetermined coding system, the picture signal processing device comprising:

   an intra prediction residual calculator that produces an intra predictive picture for a still picture constructing a moving picture, and calculates an intra prediction residual that indicates a difference between the still picture and the intra predictive picture;
   an inter prediction residual calculator that produces an inter predictive picture for the still picture constructing a moving picture, and calculates an inter prediction residual that indicates a difference between the still picture and the inter predictive picture;
   a pseudo prediction residual producer that produces a pseudo prediction residual corresponding to the still picture by using at least one of the intra prediction residual or the inter prediction residual;
   an anticipated prediction residual calculator that corrects a pseudo prediction residual produced by the pseudo prediction residual producer and corresponding to an n-th still picture, based on a pseudo prediction residual corresponding to a previous still picture of the n-th still picture and an actual prediction residual corresponding to the previous still picture of the n-th still picture, to calculate an anticipated prediction residual corresponding to the n-th still picture;
   a compression ratio controller that controls a compression ratio of compression coding of a picture signal corresponding to the n-th still picture based on the anticipated prediction residual that is calculated by the anticipated prediction residual calculator and corresponds to the n-th still picture; and
   a coder that executes compression coding of the picture signal corresponding to the n-th still picture in accordance with control by the compression ratio controller, and supplies the anticipated prediction residual calculator with an actual prediction residual that is produced through a processing process of the compression coding and corresponds to the n-th still picture.

2. The picture signal processing device according to claim 1, wherein
   the pseudo prediction residual producer employs the smaller of the intra prediction residual and the inter prediction residual for each divided region that is set in the still picture and has a predetermined size, to produce the pseudo prediction residual corresponding to the still picture.

3. The picture signal processing device according to claim 2, wherein
   the divided region is a macro block.

4. The picture signal processing device according to claim 1, wherein
   the anticipated prediction residual calculator calculates the anticipated prediction residual corresponding to the n-th still picture by adding a certain value to the pseudo prediction residual that is produced by the pseudo prediction residual producer and corresponds to the n-th still picture, the certain value being obtained by multiplying by a predetermined coefficient a difference between the pseudo prediction residual corresponding to the previous still picture of the n-th still picture and the actual prediction residual corresponding to the previous still picture of the n-th still picture.

5. The picture signal processing device according to claim 1, wherein the predetermined coding system is an MPFG (Moving Picture Experts Group) system.

6. The picture signal processing device according to claim 1, wherein the predetermined coding system is an MPFG4-AVC (Advanced Video Coding) system.

7. A picture signal processing method for executing compression coding of a picture signal for displaying a moving picture in accordance with a predetermined coding system, the picture signal processing method comprising:

an intra prediction residual calculation step for producing an intra predictive picture for a still picture constructing a moving picture, and calculating an intra prediction residual that indicates a difference between the still picture and the intra predictive picture;
an inter prediction residual calculation step for producing an inter predictive picture for the still picture constructing a moving picture, and calculating an inter prediction residual that indicates a difference between the still picture and the inter predictive picture;
a pseudo prediction residual production step for producing a pseudo prediction residual corresponding to the still picture by using at least one of the intra prediction residual or the inter prediction residual;
an anticipated prediction residual calculation step for correcting a pseudo prediction residual that is produced through processing in the pseudo prediction residual production step and corresponds to an n-th still picture, based on a pseudo prediction residual corresponding to a previous still picture of the n-th still picture and an actual prediction residual corresponding to the previous still picture of the n-th still picture, to calculate an anticipated prediction residual corresponding to the n-th still picture;
a compression ratio control step for controlling a compression ratio of compression coding of a picture signal corresponding to the n-th still picture based on the anticipated prediction residual that is calculated through processing in the anticipated prediction residual calculation step and corresponds to the n-th still picture; and
a coding step for executing compression coding of the picture signal corresponding to the n-th still picture in accordance with control by processing in the compression ratio control step, and supplying for the processing in the anticipated prediction residual calculation step an actual prediction residual that is produced through a processing process of the compression coding and corresponds to the n-th still picture.

8. A recording medium that stores a computer readable program for executing compression coding of a picture signal for displaying a moving picture in accordance with a predetermined coding system, the program comprising:

an intra prediction residual calculation step for producing an intra predictive picture for a still picture constructing a moving picture, and calculating an intra prediction residual that indicates a difference between the still picture and the intra predictive picture;
an inter prediction residual calculation step for producing an inter predictive picture for the still picture constructing a moving picture, and calculating an inter prediction residual that indicates a difference between the still picture and the inter predictive picture;
a pseudo prediction residual production step for producing a pseudo prediction residual corresponding to the still picture by using at least one of the intra prediction residual or the inter prediction residual;
an anticipated prediction residual calculation step for correcting a pseudo prediction residual that is produced through processing in the pseudo prediction residual production step and corresponds to an n-th still picture, based on a pseudo prediction residual corresponding to a previous still picture of the n-th still picture and an actual prediction residual corresponding to the previous still picture of the n-th still picture, to calculate an anticipated prediction residual corresponding to the n-th still picture;
a compression ratio control step for controlling a compression ratio of compression coding of a picture signal corresponding to the n-th still picture based on the anticipated prediction residual that is calculated through processing in the anticipated prediction residual calculation step and corresponds to the n-th still picture; and
a coding step for executing compression coding of the picture signal corresponding to the n-th still picture in accordance with control by processing in the compression ratio control step, and supplying for the processing in the anticipated prediction residual calculation step an actual prediction residual that is produced through a processing process of the compression coding and corresponds to the n-th still picture.

9. A program for executing compression coding of a picture signal for displaying a moving picture in accordance with a predetermined coding system, the program causing a computer to execute processing comprising:

an intra prediction residual calculation step for producing an intra predictive picture for a still picture constructing a moving picture, and calculating an intra prediction residual that indicates a difference between the still picture and the intra predictive picture;

an inter prediction residual calculation step for producing an inter predictive picture for the still picture constructing a moving picture, and calculating an inter prediction residual that indicates a difference between the still picture and the inter predictive picture;

a pseudo prediction residual production step for producing a pseudo prediction residual corresponding to the still picture by using at least one of the intra prediction residual or the inter prediction residual;

an anticipated prediction residual calculation step for correcting a pseudo prediction residual that is produced through processing in the pseudo prediction residual production step and corresponds to an n-th still picture, based on a pseudo prediction residual corresponding to a previous still picture of the n-th still picture and an actual prediction residual corresponding to the previous still picture of the n-th still picture, to calculate an anticipated prediction residual corresponding to the n-th still picture;

a compression ratio control step for controlling a compression ratio of compression coding of a picture signal corresponding to the n-th still picture based on the anticipated prediction residual that is calculated through processing in the anticipated prediction residual calculation step and corresponds to the n-th still picture; and

a coding step for executing compression coding of the picture signal corresponding to the n-th still picture in accordance with control by processing in the compression ratio control step, and supplying for the processing in the anticipated prediction residual calculation step an actual prediction residual that is produced through a processing process of the compression coding and corresponds to the n-th still picture.

10. A video camera that executes compression coding of a picture signal corresponding to a captured moving picture in accordance with a predetermined coding system and records a resultant picture signal in an information recording medium, the video camera comprising:

a picture capturing unit that captures a moving picture of a target object and produces the picture signal;

an intra prediction residual calculator that produces an intra predictive picture for a still picture constructing a moving picture captured by the picture capturing unit, and calculates an intra prediction residual that indicates a difference between the still picture and the intra predictive picture;

an inter prediction residual calculator that produces an inter predictive picture for the still picture constructing a moving picture captured by the picture capturing unit, and calculates an inter prediction residual that indicates a difference between the still picture and the inter predictive picture;

a pseudo prediction residual producer that produces a pseudo prediction residual corresponding to the still picture by using at least one of the intra prediction residual or the inter prediction residual;

an anticipated prediction residual calculator that corrects a pseudo prediction residual produced by the pseudo prediction residual producer and corresponding to an n-th still picture, based on a pseudo prediction residual corresponding to a previous still picture of the n-th still picture and an actual prediction residual corresponding to the previous still picture of the n-th still picture, to calculate an anticipated prediction residual corresponding to the n-th still picture;

a compression ratio controller that controls a compression ratio of compression coding of a picture signal corresponding to the n-th still picture based on the anticipated prediction residual that is calculated by the anticipated prediction residual calculator and corresponds to the n-th still picture;

a coder that executes compression coding of the picture signal corresponding to the n-th still picture in accordance with control by the compression ratio controller, and supplies the anticipated prediction residual calculator with an actual prediction residual that is produced through a processing process of the compression coding and corresponds to the n-th still picture; and

a recorder that records the picture signal that has been subjected to compression coding by the coder in the information recording medium.

# F I G . 1

EP 1 734 770 A1

# FIG.2

CODING-TARGET
PICTURE SIGNAL

INTRA PREDICTOR (11) → INTRA PREDICTIVE PICTURE → (13) − → INTRA PREDICTION RESIDUAL

INTER PREDICTOR (12) → INTER PREDICTIVE PICTURE → (14) − → INTER PREDICTION RESIDUAL

COMPARATOR (15) → PSEUDO PREDICTION RESIDUAL

2

EP 1 734 770 A1

# FIG.3

n-1-th ACTUAL
PREDICTION
RESIDUAL
SAD (n-1)

n-th PSEUDO
PREDICTION
RESIDUAL
BD (n)

```
                              21
                   ┌─────────────┐
                   │ PREDICTION  │      n-th ANTICIPATED
                   │ RESIDUAL    │─────▶ PREDICTION
                   │ CALCULATOR  │      RESIDUAL
                   └─────────────┘          PRED (n)

         22
   ┌──────────┐
──▶│ DELAYER  │────── n-1-th PSEUDO
   └──────────┘       PREDICTION
                      RESIDUAL
                        BD (n-1)

                        3
```

EP 1 734 770 A1

# FIG. 4

ANTICIPATED
PREDICTION
RESIDUAL
PRED (n)

CBR
ASSIGNER
32

CBR TARGET
CODE AMOUNT
BIT_CBR (n)

VBV (CPB)

COMPARATOR
33

TARGET
CODE
AMOUNT
BIT_TGT (n)

VBR
ASSIGNER
31

VBR TARGET
CODE AMOUNT
BIT_VBR (n)

4

EP 1 734 770 A1

# FIG.5

```
    ┌─────────────────────────────┐
    │  START PICTURE              │
    │  COMPRESSION PROCESSING     │
    └─────────────────────────────┘
                  │
                  ▼
    ┌─────────────────────────────┐  S1
    │  PRODUCE PSEUDO             │
    │  PREDICTION RESIDUAL        │
    └─────────────────────────────┘
                  │
                  ▼
    ┌─────────────────────────────┐  S2
    │  PRODUCE ANTICIPATED        │
    │  PREDICTION RESIDUAL BASED ON│
    │  PSEUDO PREDICTION RESIDUAL │
    └─────────────────────────────┘
                  │
                  ▼
    ┌─────────────────────────────┐  S3
    │  DECIDE TARGET CODE AMOUNT  │
    │  BASED ON ANTICIPATED       │
    │  PREDICTION RESIDUAL        │
    └─────────────────────────────┘
                  │
                  ▼
    ┌─────────────────────────────┐  S4
    │  CODE PICTURE SIGNAL        │
    │  BASED ON TARGET CODE       │
    │  AMOUNT                     │
    └─────────────────────────────┘
                  │
                  ▼
            ┌──────────┐
            │   END    │
            └──────────┘
```

# F I G . 6

```
START PSEUDO PREDICTION RESIDUAL
PRODUCTION PROCESSING
```

PRODUCE INTRA PREDICTIVE PICTURE
AND INTER PREDICTIVE PICTURE OF
CODING-TARGET PICTURE SIGNAL          S11

CALCULATE INTRA PREDICTION RESIDUAL
AND INTER PREDICTION RESIDUAL          S12

COMPARE INTRA PREDICTION RESIDUAL
WITH INTER PREDICTION RESIDUAL ON
EACH MACRO BLOCK BASIS AND EMPLOY
SMALLER AS PSEUDO PREDICTION RESIDUAL  S13

RETURN

# FIG.7

```
START PREDICTION RESIDUAL
PRODUCTION PROCESSING FOR
n-th CODING-TARGET PICTURE
SIGNAL
```

ACQUIRE ACTUAL PREDICTION RESIDUAL SAD (n-1) AND PSEUDO PREDICTION RESIDUAL BD (n-1) OF n-1-th CODING-TARGET PICTURE SIGNAL $\qquad$ S21

ACQUIRE PSEUDO PREDICTION RESIDUAL BD (n) OF n-th CODING-TARGET PICTURE SIGNAL $\qquad$ S22

ACQUIRE PREDICTION RESIDUAL OF n-th CODING-TARGET PICTURE SIGNAL PRED $(n)=BD(n)+G(SAD(n-1)-BD(n-1))$ $\qquad$ S23

RETURN

# FIG.8

START TARGET CODE AMOUNT
DECISION PROCESSING

CALCULATE VBR TARGET CODE AMOUNT
BIT_VBR (n) BASED ON ANTICIPATED
PREDICTION RESIDUAL PRED (n)   S31

CALCULATE CBR TARGET CODE AMOUNT
BIT_CBR (n) BASED ON ANTICIPATED
PREDICTION RESIDUAL PRED (n)   S32

S33
BIT_VBR(n)<BIT_CBR(n) ?
YES                    NO

S34
ENPLOY BIT_VBR (n) AS
TARGET CODE AMOUNT
BIT_TGT (n)

S35
ENPLOY BIT_CBR (n) AS
TARGET CODE AMOUNT
BIT_TGT (n)

RETURN

# F I G . 9

BIT RATE

UPPER LIMIT
RATE L

~51

TIME

# F I G . 1 0

BIT RATE

UPPER LIMIT
RATE L

~71

TIME

# F I G . 1 1

BIT RATE

VBR SECTION | CBR SECTION

HIGH PICTURE QUALITY MODE

UPPER LIMIT RATE L

81-B

LONG TIME MODE

82

81-A

DEGREE OF DIFFICULTY IN CODING OF SEQUENCE
(GENERATED CODE AMOUNT WHEN
FIXED QUANTIZATION SCALE IS USED)

# FIG.12

EP 1 734 770 A1

# FIG.13

ln (BIT)

QUANTIZATION SCALE QP

91-A
91-B
91-C

# FIG.14

ln (NORM_BIT)

QUANTIZATION SCALE QP

# FIG.15

ln (NORM_BIT)

102 ⌇

103 ⌇

101

QUANTIZATION
SCALE QP

# FIG.16

START CODING PROCESSING FOR
I-PICTURE AT BEGINNING OF SEQUENCE

PRODUCE INTRA PREDICTIVE PICTURE
OF CODING-TARGET PICTURE SIGNAL
OF I-PICTURE AND CALCULATE INTRA
PREDICTION RESIDUAL ERROR — S41

NORMALIZE PRESET TARGET CODE
AMOUNT BIT WITH INTRA PREDICTION
RESIDUAL ERROR — S42

CALCULATE QUANTIZATION SCALE QP
CORRESPONDING TO NORMALIZED
TARGET CODE AMOUNT — S43

EXECUTE CODING WITH APPLYING
CALCULATED QUANTIZATION
SCALE QP — S44

END

EP 1 734 770 A1

# FIG.18

EP 1 734 770 A1

## INTERNATIONAL SEARCH REPORT

| International application No. |
|---|
| PCT/JP2005/003767 |

**A. CLASSIFICATION OF SUBJECT MATTER**
Int.Cl$^7$ H04N7/32

According to International Patent Classification (IPC) or to both national classification and IPC

**B. FIELDS SEARCHED**

Minimum documentation searched (classification system followed by classification symbols)
Int.Cl$^7$ H04N7/10-7/68, H04N5/76-5/956

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
CSDB, JSTPlus FILE(JOIS)

**C. DOCUMENTS CONSIDERED TO BE RELEVANT**

| Category* | Citation of document, with indication, where appropriate, of the relevant passages | Relevant to claim No. |
|---|---|---|
| A | WO 99/3282 A (Sony Corp.),<br>21 January, 1999 (21.01.99),<br>Full text; all drawings<br>& JP 11-508430 A          & EP 924933 A1<br>& US 6678322 B1          & KR 2000-68515 A<br>& MX 99-2177 A | 1-10 |
| A | JP 6-292180 A (Matsushita Electric Industrial<br>Co., Ltd.),<br>18 October, 1994 (18.10.94),<br>Full text; all drawings<br>& JP 6-165152 A          & EP 599288 B1<br>& US 5543844 A          & DE 69319855 T1 | 1-10 |

☒ Further documents are listed in the continuation of Box C.          ☐ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>17 March, 2005 (17.03.05) | Date of mailing of the international search report<br>05 April, 2005 (05.04.05) |
|---|---|
| Name and mailing address of the ISA/<br>    Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2005/003767 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 11-341499 A  (Victor Company Of Japan, Ltd.), 10 December, 1999 (10.12.99), Full text; all drawings (Family: none) | 1-10 |
| A | JP 10-191343 A  (Sony Corp.), 21 July, 1998 (21.07.98), Full text; all drawings (Family: none) | 1-10 |

Form PCT/ISA/210 (continuation of second sheet) (January 2004)

**REFERENCES CITED IN THE DESCRIPTION**

**Patent documents cited in the description**

- WO 9826599 A
- JP 10526505 A
- JP 2003230151 A